(19) Europäisches Patentamt
European Patent Office
Office européen des brevets

(11) **EP 3 026 410 B1**

(12) **EUROPEAN PATENT SPECIFICATION**

(45) Date of publication and mention
of the grant of the patent:
**02.01.2019 Bulletin 2019/01**

(51) Int Cl.:
***G01K 11/12*** *(2006.01)*  ***G01J 3/52*** *(2006.01)*

(21) Application number: **14194881.0**

(22) Date of filing: **26.11.2014**

(54) **Method for determining a thermal history of a component**

Verfahren zur Bestimmung des Temperaturverlaufs eines Bauteils

Procédé de détermination d'un historique thermique d'un composant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.06.2016 Bulletin 2016/22**

(73) Proprietor: **Ansaldo Energia Switzerland AG**
**5401 Baden (CH)**

(72) Inventors:
• **Vassiliev, Vladimir**
**5300 Turgi (CH)**

• **Kissel, Harald**
**5417 Untersiggenthal (CH)**
• **Poser, Rico**
**70563 Stuttgart (DE)**

(74) Representative: **Bernotti, Andrea et al**
**Studio Torta S.p.A.**
**Via Viotti, 9**
**10121 Torino (IT)**

(56) References cited:
**FR-A1- 2 894 667**  **US-A- 5 526 148**
**US-A1- 2003 021 329**  **US-B1- 6 362 849**

EP 3 026 410 B1

**Description**

FIELD OF THE INVENTION

The present invention generally relates to a method for determining the thermal history of a component, particularly for applications where it is necessary to assess an unknown temperature in which the component has been exposed by means of a detection material applied thereto. The detection material has a colour responsive to the outer temperature. The proposed method provides higher repeatability of results and ensures independence of the results from external factors.

BACKGROUND

As well known, experimental investigations of components which experienced high thermal loading are often performed using optical methods, which typically include application of thermal paint on the surface of the component considered. For example, thermal state of gas turbine blades is often assessed using thermal paint. To such aim, the thermal paint is applied on blades before a test run, and after this test the maximal temperature of component can be identified. According to known methodologies, thermal paint in some industrial applications may be evaluated manually. It is restricted to few specialists and the evaluation of the tests is performed non-automatic and by means of experience. Nevertheless, manual evaluation of thermal paint is a time consuming process, which requires specially trained personnel. The repeatability of results strongly depends on the particular person performing the test, and it is not predictable.

There are several trichromatic colour models for recording of colours using cameras (e.g. RGB, HSL, Lab, YUV), but they are exclusively oriented on perception of colour by human eye. For technical applications they are insufficient.

The detection and characterisation of paint using technical utilities are thus necessary for automated paint evaluation.

For more correct technical recordings of paint colours, a photo spectrometer may be used. Such device, according to the teachings of the prior art, provides reflection coefficients for all wave lengths in visible range, and allows detection of differences also between metameric colours.

Generally, technical solutions for quantitative characterisation of metameric colours require sampling in many wave length ranges. A trichromatic recording using commercial RGB cameras proved not to be sufficient. The photo spectrometer better fits to the purpose, but it is expensive, requires contact to the surface of the component to be analysed, and provides averaged values for areas with about 8 mm diameter (i.e. it has limited spatial resolution).

According to the present invention, it is taught a method to solve the aforementioned technical problems of automated paint evaluation.

US 5 526 148 A teaches to use detection materials that have a colour responsive to temperature in order to determine temperature of a component. Other examples of known methods are disclosed in US 2003/ 021329 A1, in US 3 362 849 B1 and in FR 2 894 667 A1.

SUMMARY OF THE INVENTION

The object of the present invention is to solve the aforementioned technical problems by providing a method for determining a thermal history of a component as substantially defined in independent claim 1,

Preferred embodiments are defined in correspondent dependent claims.

According to preferred embodiments, which will be described in the following detailed description only for exemplary and non-limiting purposes, the present solution teaches to automatically recognise colours of thermal paint in industrial applications, and therefore identify distribution of maximal temperature (i.e. maximal during the whole operational period, but different in each point). Advantageously, the evaluation procedure according to the invention has been proven to be robust, simultaneously repeatable and very accurate.

According to an aspect of the invention, it is provided a method for determining a thermal history of a component, the method comprising the steps of applying a detection material on the component, the detection material having a colour responsive to an outer temperature; heating the component to known temperatures $T_i$, such that the detection material acquires colours $C_i$, each colour $C_i$ being subject to a correspondent known temperature $T_i$; associating, through a measurement system, each obtained colour $C_i$ to a set of M non-dimensional parameters $P_i$, independent from the measurement system used; establishing functional correlations $T_i = F(P1,..., P_M)_i$ between each temperature $T_i$ and the non-dimensional parameters $P_i$ correspondent thereto; heating the component to an unknown temperature $T$; associating, through a measurement system, the obtained colour $C$ to a set of M non-dimensional parameters $P_i, ..., P_M$; evaluating temperature $T$ by means of the functional correlation $T = F(P1,..., P_M)$.

According to a further aspect of the invention, associating each obtained colour $C_i$ to a set of M non-dimensional

parameters $P_i$ comprises lighting the detection material sequentially using a plurality of PMW controlled colour light sources, each one producing a colour lighting and obtaining a correspondent light reflected by the detection material, wherein the light sources are switched on and off for variable pulse widths $PW_i(U_i)$, in turn controlled by corresponding control voltages $U_i$.

According to a further aspect of the invention, the method further comprises a step of experimentally determining correlations between the pulse widths $PW_i(U_i)$ and the control voltages $U_i$, the correlation being of a linear type $PWi = m_{pw,i}U_i + n_{pw,i}$

According to a further aspect of the invention, an intensity of the reflected light is detected and measured by a digital monochrome camera.

According to a further aspect of the invention, two pictures of said coloured detection material at different control voltages are taken for each colour lighting. According to a further aspect of the invention, two pictures of a reference surface at different control voltages are taken for each colour lighting.

According to a further aspect of the invention, each non-dimensional parameter Pi is obtained, for each colour lighting, by elaborating data relative to the measured light intensity measured by the camera of said two pictures of said coloured detection material and of said reference surface.

According to a further aspect of the invention, the functional correlation $T = F(P1,..., P_M)$ is established by means of an artificial neural network. Alternatively, the functional correlations may be established by splines or other equivalent interpolation procedures.

BRIEF DESCRIPTION OF DRAWINGS

The foregoing objects and many of the attendant advantages of this invention will become more readily appreciated as the same becomes better understood by reference to the following detailed description when taken in conjunction with the accompanying drawings, wherein:

Figure 1 shows an exemplary and non-limiting schematic measurement set-up for implementing a method according to the present invention;
Figure 2 shows the principle of PMW (pulse width modulator) by way of an example of an RGB-based LED lighting (red, blue, green);
Figure 3 shows a graph depicting experimentally obtained correlations between pulse widths and control voltages for RGB LED lighting;
Figure 4 is a block diagram illustrating an exemplary embodiment of the method according to the invention.

DETAILED DESCRIPTION OF THE DRAWINGS

The method according to the present invention comprises, initially, a preparation of test samples, which includes applying a detection material on the component to be tested. To this purpose, the component is covered by a thermal paint, which has a colour responsive to an outer temperature, and heated to known temperatures $T_i$. It is to be noted that a thermal paint is only used as an example of temperature-indicating paints. A thermal paint is only capable of indicating maximum temperatures. As a result, the detection material acquires colours $C_i$, wherein each colour $C_i$ is subject to a correspondent known temperature $T_i$.

The method according to the invention then includes a step of associating, through a measurement system, each obtained colour $C_i$ to a set of non-dimensional parameters $P_i$ which are independent from the measurement system used.

The step of associating M non-dimensional parameters to each obtained colour is better detailed below.

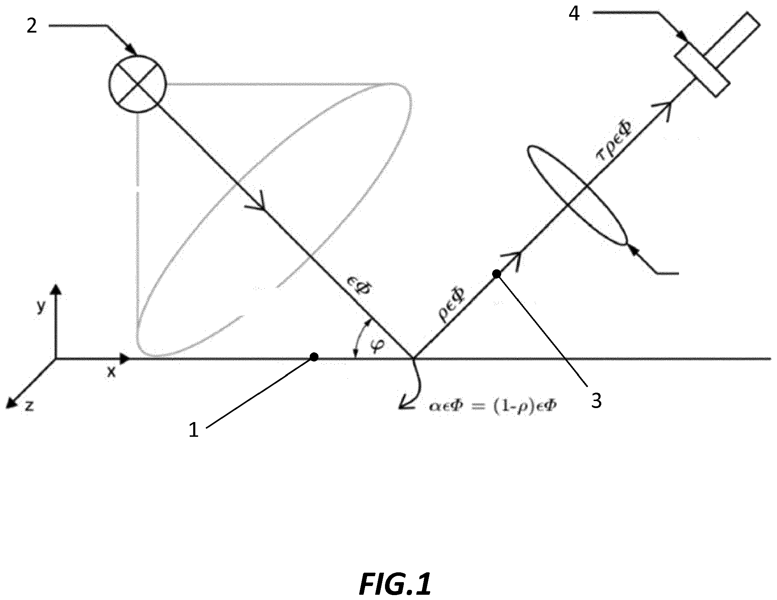

Making reference to figure 1, it is schematically shown a measurement set-up. In the figure, it is depicted a component 1 having a detection material applied on it, which is a thermal paint in the preferred embodiment here disclosed as a non-limiting example. The investigated paint is then lighted sequentially using a plurality of N different light sources 2. Each light source has a different emission spectrum. Light sources with narrow spectral bandwidths should be preferred. Preferably, light is emitted by a PWM (pulse width modulator) controlled light source. LED sources have proven to be very suitable for this purpose, but other types of applications are also possible, like laser.

Using a pulse width modulator (PWM), the intensity of the light can be changed in a wide range and can be characterised reproducibly by parameters as given in the following.

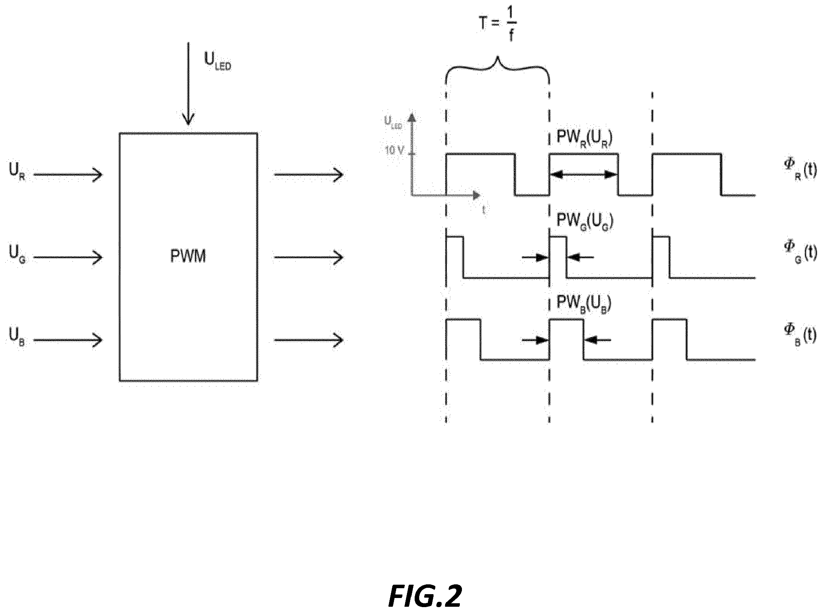

The principle of a pulse width modulator PWM is shown in Figure 2 by the example of an RGB-based LED lighting (red, blue, green, i.e. in case N=3). Each LED is controlled by a constant supply voltage $U_{LED}$. Each LED colour i can be switched on and off for a variable duration $PW_i(U_i)$ which is in turn controlled by corresponding control voltages $U_i$. These durations are called pulse widths.

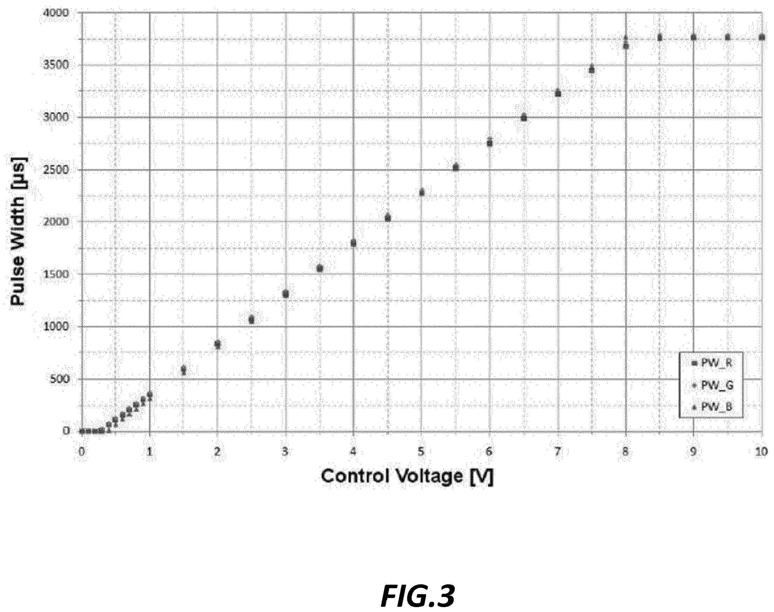

As the emitted light energy directly corresponds to the pulse width, device-specific correlations between the

control voltages $U_i$ and the pulse widths $PW_i(U_i)$ need to be experimentally determined prior to data evaluations. Such a typical calibration is shown in figure 3.

As depicted in figure 3, due to the principle of the PWM-generator, there is a wide range of control voltages where a linear approximation is perfectly sufficient. There are narrow ranges for low and high control voltages which should not be used due to saturation effects of the real hardware. Thus, the intensity ratio of two lighting settings can be precisely determined by just knowing their corresponding control voltages.

Referring back to figure 1, a light reflected from the surface of paint, indicated with reference numeral 3, is detected by a commercial digital monochrome camera 4. The signals for each lighting have their certain intensity predetermined by resolution of camera at its actual position, and some other test conditions like surface-related and observation-related specifications of the test setup. In order to enable independency from intensity of light source, type of camera and other specific conditions of the test, the set of non-dimensional parameters and appropriate measuring sequence are determined as given in detail below.

To measure the characteristic reflection of the coloured detection material (in this example being a surface coating) using the method according to the present solution, two pictures of the coloured surface are taken for each colour lighting at different control voltages. Preferably, a bright and a dark picture of the coloured surface are taken for the test, but at the same time overexposure and underexposure of the camera sensor should be avoided.

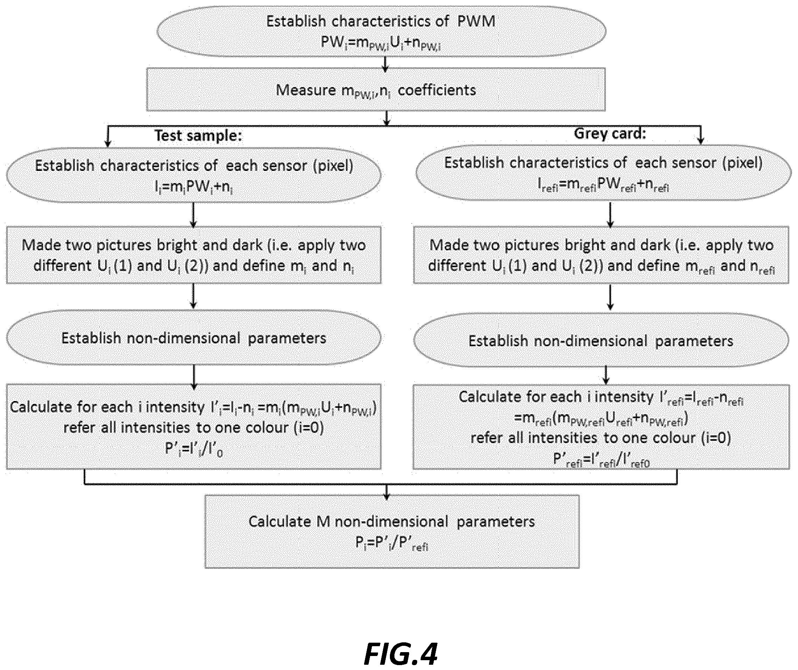

The same procedure using the same lighting settings is applied to a reference surface such as a grey card. Thus, four pictures need to be taken for each LED colour, which means 4xN pictures for full characterisation of the detection material. Using this data the M =(N-1) non-dimensional parameters, indicated in block diagram of figure 4, can be derived.

In particular, the non-dimensional parameters are obtained for each colour lighting by elaborating data relative to the light intensity measured by the camera 4 of the two pictures of the detection material and the reference surface respectively.

The method includes the following steps.

First, for each of the N colour lightings the calibration of PWM should be performed, and characteristics as shown in Fig.3 should be established. This means that the coefficients m and n in the following linear equations should be defined

$$PW_i = m_{PW,i}U_i + n_{PW,i}$$

Two pictures of test sample (bright and dark, or generally two pictures at two different control voltages) should be taken for each lighting. This means that the coefficients m and n in the following linear equations should be defined (I indicates the measured intensity)

$$I_i = m_i PW_i + n_i$$

The same procedure should be repeated for the grey card (that is the reference surface), and the appropriate coefficients should be defined:

$$I_{refi} = m_{refi} PW_{refi} + n_{refi}$$

The non-dimensional parameters are then calculated using measured data:

$$I'_i = I_i - n_i = m_i(m_{PW,i}U_i + n_{PW,i});$$

$$I'_{refi} = I_{refi} - n_{refi} = m_{refi}(m_{PW,refi} U_{refi} + n_{PW,refi})$$

$$P'_i = I'_i/I'_0 \qquad\qquad P'_{refi} = I'_{refi}/I'_{ref0}$$

From which relations the non-dimensional parameters are calculated as follows:

$$P_i = P'_i / P'_{refi}$$

The procedure is also explained in block diagram of figure 4.

These parameters $P_i$ are independent from any settings except of surface reflection, and therefore characterize the surface colour. To distinguish between different colours, N lightings are needed. Increasing the number N, a higher resolution is obtainable, resulting in more capability of identifying smaller differences between colours.

The method according to the invention can be easily automatized. However, for a correct implementation two aspects should be considered. First, it must be ensured that each lighting setting is limited to the linear ranges for $PW_i(U_i)$ as shown exemplarily in Fig. 3. Preferably, not only PWi should be a linear function of Ui. Linear relationships between PWi and Ii (lighting intensities) are assumed. This requires lightings which have extremely short and repeatable times to switch on and off. Thus, LEDs and Lasers are recommended. Furthermore, linearity between the observed intensity in the camera and the signal output is assumed. This shoud be valid for a wide range of sensors. In this respect, camera settings might become important as they might have an influence on the characteristic of the camera sensor output. Second, overexposure and underexposure of the camera sensor should be avoided. By keeping the mentioned conditions, consistent values to characterize metameric colour coatings can be evaluated as shown above.

Once the non-dimensional parameters have been determined, the method according to the invention comprises a step of establishing functional correlations between each temperature $T_i$ and the correspondent set of non-dimensional parameters:

$$T_i = F (P1,…,PM)_i$$

using, for example, artificial neural network (ANN), splines, or other interpolation procedures. Such interpolation procedures are, per se, known to those who are skilled in the art, and thus a detailed description won't be given in the present specification.

The test component is then prepared by applying the detection material on it (a thermal paint in this example) and is heated to unknown temperatures T.

The obtained colour, after the exposure in the environment having the unknown temperature to be determined, is then characterised by the M non-dimensional parameters $P_i$ according to the method described above.

Finally, the evaluation of temperatures on the test component is achieved using above-mentioned correlations:

$$T = F (P1,…,PM)$$

Although the present invention has been fully described in connection with preferred embodiments, it is evident that modifications may be introduced within the scope thereof, not considering the application to be limited by these embodiments, but by the content of the following claims.

**Claims**

1. A method for identifying a distribution of maximal temperature, thereby determining a thermal history of a component, the method comprising the steps of:

   - applying a detection material (1) on said component, the detection material (1) being a temperature-indicating paint having a temperature-responsive colour and capable of indicating maximum temperatures, whereby each colour of the detection material (1) is subject to a correspondent temperature;

   **characterized by**:

   - heating the component to known temperatures $T_i$, such that the detection material (1) acquires corresponding colours $C_i$;
   - lighting the detection material (1) using sequentially a plurality of different light sources (2) each at two different emission intensities, each light source (2) having a different emission spectrum;
   - detecting light reflected by the detection material (1) through a digital monochrome camera (4);
   - defining first parameters of a first linear relationship between light intensity emitted by each light source and light intensity of light reflected by the detection material (1) and detected by the digital monochrome camera (4);

- lighting a reference source using sequentially the plurality of different light sources (2) and the same lighting settings used for lighting the detection material (1) ;

- detecting light reflected by the detection material (1) through the digital monochrome camera (4);

- defining second parameters of a second linear relationship between light intensity emitted by each light source and light intensity of light reflected by the reference surface and detected by the camera (4);

- calculating a set of M non-dimensional parameters $P_i$ from the first parameters and the second parameters by ratio to the intensity of a reference colour ($I'_0$, $I'_{ref0}$), the non-dimensional parameters $P_i$ being thereby independent from the measurement system used;

- associating, through a measurement system, each colour $C_1$ to a respective one of the sets of M non-dimensional parameters $P_i$;

- establishing functional correlations $T_1 = F (P1,..., P_M)_i$ between each temperature $T_i$ and said non-dimensional parameters $P_i$ correspondent thereto using an interpolation procedure;

- heating the component to an unknown temperature T;

- characterising the obtained colour C by a respective set of M non-dimensional parameters $P_1$, ..., $P_M$;

- evaluating temperature T by means of said functional correlation $T = F (P1,..., P_M)$.

2. The method according to the preceding claim, wherein said step of associating each obtained colour $C_i$ to a set of M non-dimensional parameters $P_i$ comprises lighting the detection material sequentially using a plurality of PMW controlled colour light sources (2), each one producing a colour lighting and obtaining a correspondent light reflected (3) by the detection material, wherein said light sources are switched on and off for variable pulse widths $PW_1(U_i)$, in turn controlled by corresponding control voltages $U_i$.

3. The method according to the preceding claim, further comprising a step of experimentally determining correlations between said pulse widths $PW_1(U_i)$ and said control voltages $U_1$, said correlation being of a linear type $PWi = m_{pw,1}U_1 + n_{pw,i}$

4. The method according to claims 2 or 3, wherein an intensity of the reflected light (3) is detected and measured by the digital monochrome camera (4).

5. The method according to any of the preceding claims, wherein said functional correlation **T =** F (P1,..., $P_M$) is established by means of an artificial neural network.

**Patentansprüche**

1. Verfahren zur Ermittlung einer Verteilung einer Maximaltemperatur und dadurch Bestimmen einer Temperaturhistorie eines Bauteils, wobei das Verfahren folgende Schritte umfasst:

- Aufbringen eines Detektionsmaterials (1) auf dieses Bauteil, wobei das Detektionsmaterial (1) ein temperaturanzeigender Anstrich mit einer temperaturempfindlichen Farbe ist, der in der Lage ist, Maximaltemperaturen anzuzeigen, wobei jede Farbe des Detektionsmaterials (1) von einer entsprechenden Temperatur abhängt; **gekennzeichnet durch**:

- Erwärmen des Bauteils auf bekannte Temperaturen $T_i$, so dass das Detektionsmaterial (1) die entsprechenden Farben $C_i$ erfasst;

- Beleuchten des Detektionsmaterials (1), indem sequentiell eine Vielzahl unterschiedlicher Lichtquellen (2) verwendet werden, die jeweils zwei unterschiedliche Emissionsstärken aufweisen, wobei jede Lichtquelle (2) ein unterschiedliches Emissionsspektrum aufweist;

- Detektieren des von dem Detektionsmaterial (1) reflektierten Lichts mithilfe einer digitalen Monochromkamera (4);

- Definieren erster Parameter einer ersten linearen Beziehung zwischen der von jeder Lichtquelle emittierten Lichtstärke und der Lichtstärke des von dem Detektionsmaterial (1) reflektierten und von der digitalen Monochromkamera (4) detektierten Lichts;

- Beleuchten einer Referenzquelle, indem sequentiell die Vielzahl unterschiedlicher Lichtquellen (2) und die gleichen Beleuchtungseinstellungen verwendet werden wie zur Beleuchtung des Detektionsmaterials (1);

- Detektieren des von dem Detektionsmaterial (1) reflektierten Lichts mithilfe der digitalen Monochromkamera (4);

- Definieren zweiter Parameter einer zweiten linearen Beziehung zwischen der von jeder Lichtquelle emittierten Lichtstärke und der Lichtstärke des von der Referenzoberfläche reflektierten und von der Kamera (4) detektierten Lichts;

- Berechnen einer Reihe M dimensionsloser Parameter $P_i$ anhand der ersten Parameter und der zweiten Parameter durch das Verhältnis zu der Intensität einer Referenzfarbe ($I'_0$, $I'_{ref0}$), wobei die dimensionslosen Parameter $P_i$ dadurch unabhängig von dem verwendeten Messsystem sind;
- Zuordnen jeder Farbe $C_i$ zu einem entsprechenden Parameter der Reihe M dimensionsloser Parameter $P_i$ mithilfe eines Messsystems;
- Bestimmen funktionaler Beziehungen $T_i = F(P1,..., P_M)_i$ zwischen jeder Temperatur $T_i$ und den entsprechenden dimensionslosen Parametern $P_i$ mithilfe eines Interpolationsverfahrens;
- Erwärmen des Bauteils auf eine unbekannte Temperatur T;
- Charakterisieren der erhaltenen Farbe C anhand einer entsprechenden Reihe M dimensionsloser Parameter $P_i$,..., $P_M$;
- Auswerten der Temperatur T mithilfe der funktionalen Beziehung $T = F(P1,..., P_M)$.

2. Verfahren nach einem der vorstehenden Ansprüche, wobei der Schritt des Zuordnens jeder erhaltenen Farbe $C_i$ zu einer Reihe M dimensionsloser Parameter $P_i$ das Beleuchten des Detektionsmaterials umfasst, indem sequentiell eine Vielzahl von PMW-gesteuerten Farblichtquellen (2) verwendet wird, die jeweils eine Farbbeleuchtung erzeugen und ein entsprechendes, von dem Detektionsmaterial reflektiertes Licht (3) empfangen, wobei die Lichtquellen für variable Pulsbreiten $PW_i(U_i)$ ein- und ausgeschaltet werden, die wiederum durch entsprechende Steuerspannungen $U_i$ gesteuert werden.

3. Verfahren nach einem der vorstehenden Ansprüche, das zudem einen Schritt umfasst, in dem experimentell Korrelationen zwischen den Pulsbreiten $PW_i(U_i)$ und den Steuerspannungen $U_i$ bestimmt werden, wobei es sich bei der Korrelation um eine lineare Korrelation $PW_i = m_{pw,i}U_i + n_{pw,i}$ handelt.

4. Verfahren nach Anspruch 2 oder 3, wobei eine Intensität des reflektierten Lichts (3) von der digitalen Monochromkamera (4) detektiert und gemessen wird.

5. Verfahren nach einem der vorstehenden Ansprüche, wobei die funktionale Beziehung $T = F(P1,..., P_M)$ mithilfe eines künstlichen neuronalen Netzes bestimmt wird.

**Revendications**

1. Procédé permettant d'identifier une distribution de température maximale afin de déterminer l'historique thermique d'un composant, le procédé comprenant les étapes suivantes :

- l'application d'un matériau de détection (1) sur ledit composant, le matériau de détection (1) étant une peinture indiquant la température, dotée d'une couleur sensible à la température et apte à indiquer des températures maximales, moyennant quoi chaque couleur du matériau de détection (1) est assujettie à une température correspondante ;

**caractérisé en ce qu**'il comprend :

- le chauffage du composant à des températures connues $T_i$, de sorte que le matériau de détection (1) acquiert des couleurs correspondantes $C_i$ ;
- l'éclairage du matériau de détection (1) en utilisant séquentiellement une pluralité de sources de lumières différentes (2) chacune à deux intensités d'émission différentes, chaque source de lumière (2) ayant un spectre d'émission différent ;
- la détection de la lumière réfléchie par le matériau de détection (1) au travers d'une caméra monochrome numérique (4) ;
- la définition de premiers paramètres d'une première relation linéaire entre l'intensité de lumière émise par chaque source de lumière et l'intensité lumineuse de la lumière réfléchie par le matériau de détection (1) et détectée par la caméra monochrome numérique (4) ;
- l'éclairage d'une source de référence en utilisant séquentiellement la pluralité de sources de lumières différentes (2) et les mêmes réglages d'éclairage que ceux utilisés pour éclairer le matériau de détection (1) ;
- la détection de la lumière réfléchie par le matériau de détection (1) au travers de la caméra monochrome numérique (4) ;
- la définition de seconds paramètres d'une seconde relation linéaire entre l'intensité de lumière émise par chaque source de lumière et l'intensité lumineuse de la lumière réfléchie par la surface de référence et détectée par la caméra (4) ;
- le calcul d'un ensemble de M paramètres non dimensionnels $P_i$ à partir des premiers paramètres et des seconds paramètres par rapport à l'intensité d'une couleur de référence ($I'_0$, $I'_{ref0}$), les paramètres non dimensionnels $P_i$ étant de ce fait indépendants du système de mesure utilisé ;
- l'association, au travers d'un système de mesure, de chaque couleur $C_i$ à l'un respectif des ensembles de M paramètres non dimensionnels $P_i$ ;
- l'établissement de corrélations fonctionnelles $T_i = F (P_1, ..., P_M)_i$ entre chaque température $T_i$ et lesdits paramètres non dimensionnels $P_i$ correspondant à celle-ci au moyen d'une opération d'interpolation ;
- le chauffage du composant à une température inconnue T ;
- la caractérisation de la couleur C obtenue par un ensemble respectif de M paramètres non dimensionnels $P_i, ..., P_M$ ;
- l'évaluation de la température T au moyen de ladite corrélation fonctionnelle $T = F (P_1, ..., P_M)$.

2. Procédé selon la revendication précédente, dans lequel ladite étape d'association de chaque couleur $C_i$ obtenue à un ensemble de M paramètres non dimensionnels $P_i$ comprend l'éclairage du matériau de détection séquentiellement au moyen d'une pluralité de sources de lumière de couleur (2) commandées par modulation en largeur d'impulsion, chacune produisant un éclairage de couleur et l'obtention d'une lumière correspondante réfléchie (3) par le matériau de détection, dans lequel lesdites sources de lumière sont mises sous tension et hors tension pour des largeurs d'impulsion variables $PW_i(U_i)$, elles-mêmes commandées par des tensions de commande correspondantes $U_i$.

3. Procédé selon la revendication précédente, comprenant en outre une étape de détermination par voie expérimentale de corrélations entre lesdites largeurs d'impulsion $PW_i(U_i)$ et lesdites tensions de commande $U_i$, ladite corrélation étant d'un type linéaire $PW_i = m_{pw,i}U_i + n_{pw,i}$.

4. Procédé selon les revendications 2 ou 3, dans lequel une intensité de la lumière réfléchie (3) est détectée et mesurée par la caméra monochrome numérique (4).

5. Procédé selon l'une quelconque des revendications précédentes, dans lequel ladite corrélation fonctionnelle $T = F(P_1, ..., P_M)$ est établie au moyen d'un réseau neuronal artificiel.

**FIG.1**

**FIG.2**

EP 3 026 410 B1

*FIG.3*

Establish characteristics of PWM
$PW_i = m_{PW,i}U_i + n_{PW,i}$

Measure $m_{PW,i}, n_i$ coefficients

**Test sample:**

Establish characteristics of each sensor (pixel)
$I_i = m_i PW_i + n_i$

Made two pictures bright and dark (i.e. apply two different $U_i(1)$ and $U_i(2)$) and define $m_i$ and $n_i$

Establish non-dimensional parameters

Calculate for each i intensity $I'_i = I_i - n_i = m_i(m_{PW,i}U_i + n_{PW,i})$ refer all intensities to one colour (i=0)
$P'_i = I'_i / I'_0$

**Grey card:**

Establish characteristics of each sensor (pixel)
$I_{refi} = m_{refi}PW_{refi} + n_{refi}$

Made two pictures bright and dark (i.e. apply two different $U_i(1)$ and $U_i(2)$) and define $m_{refi}$ and $n_{refi}$

Establish non-dimensional parameters

Calculate for each i intensity $I'_{refi} = I_{refi} - n_{refi}$
$= m_{refi}(m_{PW,refi}U_{refi} + n_{PW,refi})$
refer all intensities to one colour (i=0)
$P'_{refi} = I'_{refi} / I'_{ref0}$

Calculate M non-dimensional parameters
$P_i = P'_i / P'_{refi}$

*FIG.4*

EP 3 026 410 B1

**EP 3 026 410 B1**

**Patent documents cited in the description**

- US 5526148 A
- US 2003021329 A1
- US 3362849 B1
- FR 2894667 A1